# EUROPEAN PATENT APPLICATION

(11) **EP 4 239 392 A1**
(43) Date of publication of application: **06.09.2023**
(21) Application number: 23160267.3
(22) Date of filing: 06.03.2023
(51) Int. Cl.: G02B 26/08

(54) **CARRIER DEVICE FOR AN OPTICAL ELEMENT**

(30) Priority: 04.03.2022 DE 102022105139
(71) Applicant: Optotune Switzerland AG, 8953 Dietikon (CH)
(72) Inventor: SMOLKA, Stephan, 8953 Dietikon (CH); ASCHWANDEN, Manuel, 8953 Dietikon (CH); ZESCH, Wolfgang, 8953 Dietikon (CH)
(74) Representative: Schulz Junghans Patentanwälte PartGmbB

(57) **Abstract**

The present invention relates to Carrier device (1) for carrying an optical element (2), comprising: a platform (P) defining a plane (P1), a base (S), a spring structure (3) connecting the platform to the base so as to allow tilting of the platform with respect to the base about a least a first axis (A) extending parallel to said plane, a first magnet (M1) and a first coil (C1), wherein the first magnet is connected to the platform and the first coil (C1) is connected to the base, or wherein the first magnet is connected to the base and the first coil (C1) is connected to the platform (P), and wherein the first magnet (M1) is magnetized parallel to said plane (P1), wherein the first coil (C1) comprises a first coil section (10) opposing the first magnet (M1), such that an electrical current flowing through the first coil section (10) generates a Lorentz force in a direction extending at an angle in the range from 88° to 92° with respect to said plane (P1) such that a tilting of the platform (P) is caused, and wherein the platform (P), the base (S), the first magnet (M1) and the first coil section (10) are arranged in a common extension plane running parallel to said plane (P1).

## Description

The present invention relates to a carrier device for carrying an optical element.

Such devices are particularly used to carry and tilt an optical element, e.g. a flat transparent plate with two opposing parallel optical surfaces, between at least two positions. One important application of such a device is a so-called pixel shifter (often abbreviated as XPR) that can be used to increase the resolution of an image projected through the tilting glass plate of the pixel shifter.

Particularly resolution of an image can be enhanced by moving the image e.g. half of a pixel between image capture and combining the images into a resulting image. The shifting can be accomplished by letting light used to project the image on an image sensor pass through said plate and tilting the latter about a defined axis by a defined angle corresponding e.g. to the half pixel shift.

Existing devices capable of such pixel shifting usually stack the different components vertically or need supporting structures or field guiding structure that require quite some installation space orthogonal to the plate. Further, existing XPRs such as reluctance actuator-based designs disclosed in WO2015/086166A1 and WO2016/124782 A1 rely on an airgap that has to be as small as possible to provide sufficient actuation force. However, such small air gaps typically require low-tolerance parts and processes, which considerably increases parts costs and/or leads to high yield losses in production.

Furthermore, for several applications the XPR (pixel shifter) needs to be very small. Specifically, critical is the height, i.e., the extension parallel to the optical path (orthogonal to the glass plane).

Based on the above, the problem to be solved by the present invention is to provide a carrier device for carrying, particularly tilting, an optical element that comprises an improved design to reduce overall height parallel to the optical path.

This problem is solved by a carrier device having the features of claim 1.

Preferred embodiments of this aspect of the present invention are stated in the dependent claims and are described below.

According to claim 1 a carrier device for carrying an optical element, particularly for tilting the optical element to increase resolution of an image projected through the optical element (which may form a so called XPR or pixel shifter), is disclosed, the carrier device comprising:
- a platform defining a plane,
- a base,
- a spring structure connecting the optical element to the base so as to allow tilting of the optical element with respect to the base about a least a first axis extending parallel to said plane,
- a first magnet and a first coil, wherein the first magnet is arranged on the platform and the first coil is arranged on the base, or wherein the first magnet is arranged on the base and the first coil is arranged on the platform, and wherein the first magnet is magnetized parallel to said plane (i.e. comprises a magnetization that runs parallel to said plane),
- wherein the first coil comprises a first coil section opposing the first magnet, such that an electrical current flowing through the first coil section generates a Lorentz force in a direction extending essentially orthogonal to said plane (e.g. at an angle in the range from 88° to 92°) such that a tilting of the platform is caused for tilting the optical element about said at least one first axis, and wherein
- the platform, the base, the first magnet and the first coil are nested in a layer structure running parallel to said plane.

Particularly, the present invention aims at arranging the main components of the device, e.g. platform (optical element), magnet(s) and coil(s) laterally, which can be achieved by providing the respective magnet with a magnetization that is in plane with said main components, i.e., extends parallel to said plane.

In particular, the first coil comprises a virtual coil axis (i.e. winding axis) W about which the windings extend. The virtual coil axis extends perpendicular with respect to the first axis and/or perpendicular to a main extension direction of the base.

Advantageously, the present invention results in a lower demand on part tolerances and thus lower part costs. Further, less parts needed which also decreases the overall part costs. Furthermore, vertical tolerances (part flatness and part thickness) are less critical. As a consequence of the design according to the present invention a height of the carrier device below 2 mm can be achieved, wherein a height of 1 mm or even 0.8 mm seems feasible so that new, advanced applications of the carrier device are possible.

As will be described further below, the platform can comprise or form the optical element. Furthermore, an optical element can be arranged on the platform, i.e. held by the platform. In the latter case the platform defines said plane in that it determines/defines the spatial position of a plane of the optical element (such as an optical surface of the optical element) when the optical element is connected to the platform.

According to a preferred embodiment of the invention, the carrier device comprises a height that is smaller or equal to 3 mm, particularly smaller or equal to 2 mm, particularly smaller or equal to 1.5 mm.

Further, according to an embodiment of the present invention, the first coil is connected to the base and surrounds the platform. Particularly, the platform can be arranged in a through-opening of the base. Here the base can form a frame structure.

Particularly, the base comprises or is formed as a printed circuit board, wherein the first coil is preferably integrated into the printed circuit board. This can also apply to all other embodiments, wherein further coils comprised by the carrier device may also be integrated into the printed circuit board.

Further, according to an embodiment of the present invention, the first magnet is arranged at an edge of the platform, particularly such that the first magnet is arranged between the platform and a portion of the base facing the platform, wherein preferably the carrier device comprises a second magnet being arranged at an edge of the platform, the second magnet opposing the first magnet, particularly such that the second magnet is arranged between the platform and a portion of the base facing the platform. In particular, the first and the second magnet are arranged opposite sides of the platform. Particularly, in an embodiment, the first magnet (particularly also the second to fourth magnet, see below) is a permanent magnet.

Further, particularly, in an embodiment, the first coil comprises a further first coil section opposing the second magnet, such that an electrical current flowing through the further first coil section generates a Lorentz force in a direction extending orthogonal to said plane such that a tilting of the platform is caused/contributed to for tilting the platform about said at least one (or merely one) first axis.

Further, particularly, in an embodiment, the second magnet is magnetized parallel to said plane, too. Particularly, the magnetizations of the first and second magnets are oriented such that Lorentz forces generated at the first coil sections work in the same tilt direction for a given current flowing through the first coil.

In the above-described embodiment the first coil can be a single coil. In this regard, in an embodiment, the spring structure comprises two spring arms connecting the platform to the base to allow said tilting of the optical element with respect to the base about the at least one first axis (particularly merely about said first axis). Particularly, each spring arm may connect to a corner region of the platform, said corner regions being arranged diagonally with respect to one another. Thus, here, tilting is particularly done about a single axis running parallel to said plane, wherein the actuator only needs a single (first) coil and said two magnets.

However, it is also possible to adapt the carrier device to allow for tilting the platform/optical element also in two dimensions.

Particularly, according to an embodiment of the invention, the spring structure comprises a plurality of spring arms, particularly four spring arms, allowing a tilting of the platform about any axis extending parallel to said plane.

Further, according to an embodiment of the present invention, the carrier device comprises a plurality of coils (among them e.g. said first coil) configured to generate torques in different tilting directions of the platform.

Further, according to an embodiment of the present invention, the respective coil (particularly also the first coil) comprises a second coil section, particularly for contributing to closing coil windings of the respective coil (so that the coil windings of the respective coil form a continuous conductor capable of generating a magnetic field when a current passes through the conductor). Particularly, since the first coil surrounding the platform can comprise multiple first coil sections, the first coil can comprise multiple such second coil sections, wherein each second coil section then connects two neighbouring first coil sections.

Further, according to an embodiment of the present invention, the second coil section of the respective coil of said plurality of coils does not contribute or contributes less to a Lorentz force generated with help of the respective coil than a first coil section of the respective coil. For this, according to an embodiment, the carrier device can comprise a magnetic yoke arranged between the first coil section and the second coil section. Alternatively, or in addition, the second coil section can be arranged in a zone with a lower magnetic field than the first coil section. Further, according to an embodiment, the second coil section can also be arranged in a zone with an opposing magnetic field (i.e. a field counteracting a magnetic field acting in the vicinity of the respective first coil section), wherein particularly the carrier device is configured to generate said opposing magnetic field by a magnet portion arranged on the platform.

Further, according to an embodiment of the present invention, the carrier device further comprises a second magnet connected to the platform, wherein the second magnet is magnetized parallel to said plane (i.e. comprises a magnetization that runs parallel to said plane), and wherein the first coil comprises a further first coil section opposing the second magnet, such that an electrical current flowing through the further first coil section generates a Lorentz force in a direction extending essentially orthogonal (i.e. at an angle in the range from 88° to 92°) to said plane such that a tilting of the platform is caused. Particularly, for a given current both first current sections generate Lorentz forces acting in the same tilt direction. Particularly, the second magnet is arranged on a side of the platform opposite the first magnet in said plane. Particularly, the second magnet is magnetized in the same direction as the first magnet.

Furthermore, according to an embodiment, the carrier device can further comprise a third and a fourth magnet connected to the platform, respectively, wherein the third magnet is arranged at an angle with respect to the first magnet, and wherein the fourth magnet is arranged at an angle with respect to the second magnet, wherein the third and the fourth magnet are each magnetized parallel to said plane. Particularly, the first coil can comprise a second coil section opposing the third magnet, preferably such that an electrical current flowing through the second coil section generates a Lorentz force in a direction extending at an angle in the range from 88° to 92° with respect to said plane such that a tilting of the platform is caused. Furthermore, the first coil can comprise a further second coil section opposing the fourth magnet, preferably such that an electrical current flowing through the further second coil section generates a Lorentz force in a direction extending at an angle in the range from 88° to 92° with respect to said plane such that a tilting of the platform is caused. Further, in a preferred embodiment, the first and the third magnet are arranged adjacent a first corner of the platform and the second and the fourth magnet are arranged adjacent a second corner of the platform (e.g. at angles of 90°), wherein said first and second corner are arranged diagonally with respect to one another. Furthermore, according to an embodiment, the first and the third magnet can be integrally connected to one another so as to form an angled first magnet (enclosing e.g. said 90° angle). Likewise, the second and the fourth magnet can be integrally connected to one another, i.e., so as to form an angled second magnet of the carrier device (enclosing e.g. said 90° angle).

Furthermore, according to yet another preferred embodiment of the carrier device according to the present invention, the platform has a rectangular contour as seen in a top view perpendicular to the plane, and/or the base comprises an opening, wherein the opening extends completely through the base in a direction perpendicular to the plane and an inner contour of the opening has a rectangular contour as seen in a top view perpendicular to the plane. In particular, the contour of the opening is similar to the contour of the platform.

Here and in the following "similar" refers to a relation of two geometrical shapes in the sense of Euclidean geometry. In Euclidean geometry, two objects are similar if they have the same shape, or one has the same shape as the mirror image of the other. More precisely, one can be obtained from the other by uniformly scaling (enlarging or reducing), possibly with additional translation, rotation and reflection. This means that either object can be rescaled, repositioned, and reflected, so as to coincide precisely with the other object. If two objects are similar, each is congruent to the result of a particular uniform scaling of the other.

Furthermore, in the embodiment at hand, the platform is at least partially arranged in the opening, and the first axis extends obliquely with respect to the principal axes of the contour (preferably, the first axis extends at an angle of 45° with respect to the principal axes of the rectangularly shaped platform as seen in a top view).

Further, in the embodiment at hand, the carrier device comprises a third and a fourth magnet, wherein the third magnet and the first magnet are arranged at a common first edge of the contour and at adjacent sides of the contour, and the fourth magnet and the second magnet are arranged at a common second edge of the contour and at adjacent sides of the contour, wherein the first edge is opposed to the second edge, wherein an imaginary connection line between the first edge and the second edge extends obliquely, preferably perpendicular, to the first axis, wherein the third and the fourth magnet are each magnetized parallel to said plane, wherein the first coil comprises a second coil section opposing the fourth magnet, particularly such that an electrical current flowing through the second coil section generates a Lorentz force in a direction extending at an angle in the range from 88° to 92° with respect to said plane such that a tilting of the platform is caused, and the first coil comprises a further second coil section opposing the third magnet, particularly such that an electrical current flowing through the further second coil section generates a Lorentz force in a direction extending at an angle in the range from 88° to 92° with respect to said plane such that a tilting of the platform is caused.

Thus, in the afore-described embodiment, the optically active region of the platform has a shape which is essentially rectangular, because most image formats have a rectangular shape. For resolution enhancement (pixel shifting) the plate must be tilted diagonally with respect to the principal axes of the rectangular shape. Thus, the magnets are arranged at opposed edges of the rectangular shape, to maximize the leverage of the Lorentz force.

Further, in an embodiment of the present invention, the carrier device comprises a second coil being arranged on the base, wherein the first coil surrounds the second coil. Particularly the first coil surrounds the platform.

Further, according to an embodiment of the present invention, the carrier device further comprises a third magnet connected to the platform, wherein the third magnet is magnetized parallel to said plane (i.e. comprises a magnetization that runs parallel to said plane), and wherein the second coil comprises a first coil section opposing the third magnet, such that an electrical current flowing through the first coil section of the second coil generates a Lorentz force in a direction extending essentially orthogonal to said plane (e.g. at an angle between 88° and 92°) such that a tilting of the platform is caused, and wherein the second coil comprises a second coil section opposite the first coil section of the second coil, wherein the first coil section of the second coil is arranged between the second coil section of the second coil and the third magnet. Particularly, according to an embodiment of the invention, the third magnet is magnetized in a direction obliquely or perpendicularly with respect to the direction of the magnetization of the first and second magnet.

Furthermore, in an embodiment of the invention, a magnetic yoke is arranged between the first and the second coil sections of the second coil.

Further, according to an embodiment of the present invention, the carrier device further comprises a third coil, wherein the third coil is arranged on the base opposite the second coil and wherein the first coil also surrounds the third coil.

Further, according to an embodiment of the present invention, the carrier device further comprises a fourth magnet connected to the platform, wherein the fourth magnet is magnetized parallel to said plane (i.e. comprises a magnetization that runs parallel to said plane). Particularly, the fourth magnet is arranged on a side of the platform opposite the third magnet in said plane. In particular, the fourth magnet is magnetized in a direction parallel to the magnetization of the third magnet.

Further, according to an embodiment of the invention, the third coil comprises a first coil section opposing the fourth magnet, such that an electrical current flowing through the first coil section of the third coil generates a Lorentz force in a direction extending orthogonal to said plane such that a tilting of the platform is caused, and wherein the third coil comprises a second coil section opposite the first coil section of the third coil, wherein the first coil section of the third coil is arranged between the second coil section of the third coil and the fourth magnet, wherein preferably a magnetic yoke is arranged between the first and the second coil sections of the third coil.

Summarizing, the above described embodiment provides a symmetric design for tilting the platform in two dimensions, e.g. so that four different spatial potions of the platform can be realized with the help of one surrounding first coil and two local coils (second and third coils) that are arranged with respect to one another as specified above.

Further, according to an alternative embodiment of the present invention, the carrier device comprises a pivot joint pivotably connecting the platform to the base on a side of the base opposite the second coil. This particularly asymmetric design for tilting the platform in two dimensions allows to generate e.g. four different spatial positions of the platform with the help of one surrounding first coil, one local coil (second coil) and a pivot joint (e.g. leaf spring) opposite the second coil. Also, here, the first coil preferably surrounds the platform and the second coil. In particular, also here a magnetic yoke can be arranged between a first coil section and a second coil section to reduce influence of the second coil section on force generation.

According to an embodiment, the spring structure, particularly the spring arms, connecting the platform to the base (apart from the pivot joint), are configured to prevent a rotation of the platform in the plane and particularly generate a certain stiffness in the respective tilting direction.

Further, according to an embodiment of the present invention, the platform comprises magnetic yokes, each yoke reaching around an associated first coil section.

Further, according to an embodiment of the present invention, the platform comprises or forms an optical element.

Further, according to an embodiment of the present invention, the platform carries a separate optical element.

Further, according to an embodiment of the present invention, the optical element is one of: a transparent plate, a glass plate, a mirror, a prism, a diffuser.

Particularly, according to a preferred embodiment of the present invention, the optical element is a flat transparent plate extending along said extension plane, the plate member comprising a thickness orthogonal to the extension plane, which thickness is smaller than its extensions parallel to the extension plane. Particularly, said thickness is smaller than 2 mm. Furthermore, the flat transparent plate comprises to planar opposing surfaces that are parallel to one another as well as parallel to said plane.

Further, according to an embodiment of the present invention, the respective coil (e.g. first to third coils) extends parallel to said plane wherein the respective coil comprises a virtual coil axis about which windings of the respective coil extend, wherein said coil axis extends orthogonal to said plane defined by the base.

In the above, embodiments of the present invention have been predominantly described wherein the magnets are connected to the platform and thus move with the platform. These designs are therefore also termed moving magnet designs. In all embodiments described herein it is in principle possible to exchange positions of the magnets and coils, i.e. arrange the coils on the platform and the magnets on the base such that in turn the magnets oppose the respective first coil section of an associated coil. Now the coils move with the platform. Such designs are therefore also termed moving coil designs.

Further features and advantages of the present inventions as well as embodiments of the present invention shall be described in the following with reference to the Figures, wherein
- Fig. 1: shows a perspective view of an embodiment of a carrier device according to the present invention for tilting an optical element, particularly in form of a flat transparent plate, about a single axis;
- Fig. 2: shows a cross-sectional view of the carrier device shown in Fig. 1;
- Fig. 3: (A) shows a schematic top view of an embodiment of a carrier device according to the present invention for tilting an optical element, particularly in form of a flat transparent plate, about at least two different axes; (S) shows a cross-sectional view of the carrier device;
- Fig. 4: (A) shows a schematic top view of a further embodiment of a carrier device according to the present invention for tilting an optical element, particularly in form of a flat transparent plate, about at least two different axes; (S) shows a cross-sectional view of the carrier device;
- Fig. 5: shows an alternative variant of arranging coils of a carrier device according to the present invention, and
- Fig. 6: shows a schematic top view of a further embodiment of a carrier device according to the present invention for tilting an optical element, particularly in form of a flat transparent plate, about at least two different axes;
- Fig. 7: shows a schematic top view of a further embodiment of a carrier device according to the present invention for tilting an optical element, particularly in form of a flat transparent plate, about at least two different axes;
- Fig. 8: shows a schematic top view of a further embodiment of a carrier device according to the present invention for tilting an optical element, particularly in form of a flat transparent plate, about at least two different axes by using a pivot joint on one side of the platform;
- Fig. 9: shows a cross-sectional view of a magnetic yoke that can be used in the carrier device according to the present invention to shield a specific coil section from a magnet so as to minimize an effect of the magnet on said coil section, wherein here the magnetic yoke is fixed to the base and comprises a straight cross section;
- Fig. 10: shows a cross-sectional view of a magnetic yoke that can be used in the carrier device according to the present invention to shield a specific coil section from a magnet so as to minimize an effect of the magnet on said coil section, wherein here the magnetic yoke is fixed to the base and comprises a curved cross section; and
- Fig. 11: shows a cross-sectional view of a magnetic yoke that can be used in the carrier device according to the present invention to shield a specific coil section from a magnet so as to minimize an effect of the magnet on said coil section, wherein here the magnetic yoke is fixed to the platform.

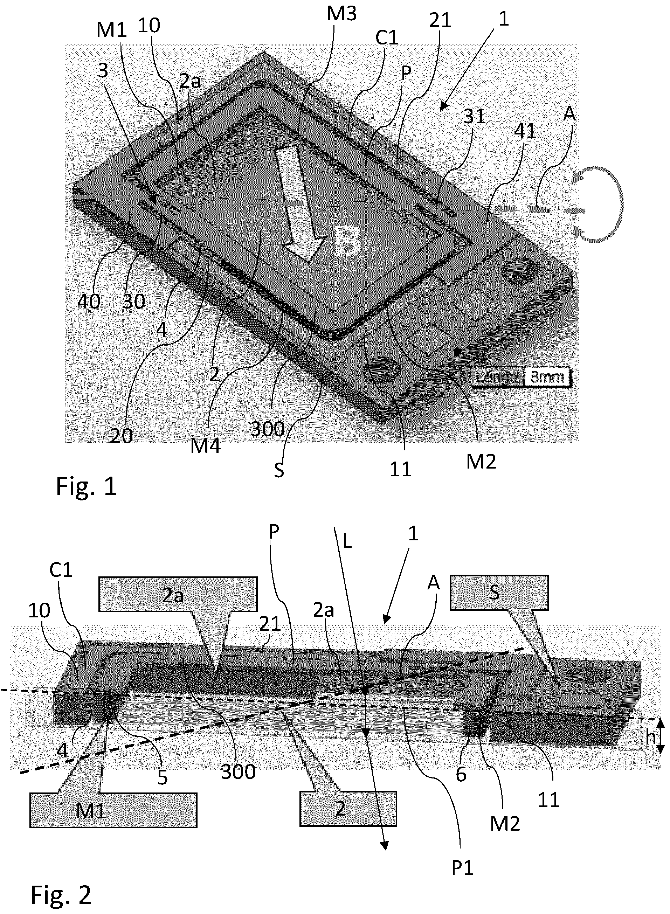

Fig. 1 shows an embodiment of a carrier device 1 for carrying an optical element 2, wherein the device 1 comprises a platform P defining a plane P1, wherein here the platform P comprises the optical element 2 and a frame member 300 holding the optical element 2. The optical element 2 is preferably designed as a transparent plate 2 (e.g. glass plate) having two opposing planar and parallel surfaces 2a, 2b. The plane P1 corresponds to the top surface 2a of the optical element 2.

The device further comprises a base S, and a spring structure 3 connecting the platform P to the base S so as to allow tilting of the platform P with respect to the base S about a single axis A indicated in Fig. 1 with a dashed line, which axis A extends parallel to said plane P1. The spring structure 3 comprises said frame 300 and two spring arms 30, 31 that connect the frame 300 to pads 40, 41 via which the spring structure 3 is connected to the base S. The pads 40, 41 can be arranged diagonally with respect to one another. Particularly, each spring arm 30, 31 may connect to a corner region of the platform P, said corner regions being arranged diagonally with respect to one another. Light L impinging on the top surface 2a is shifted depending on a tilting angle of the plate 2 about the axis A as indicated in Fig. 2.

The device further comprises a first magnet M1 and a first coil C1, wherein the first magnet M1 is connected to the platform P and the first coil C1 is connected to the base S. The first magnet M1 is magnetized parallel to said plane P1, the corresponding magnetic field B is indicated in Fig. 1 with an arrow. Preferably, the device 1 further comprises a second magnet M2 opposite the first magnet M1, the second magnet M2 is also magnetized in said plane P1. As can be seen from the cross-section of Fig. 2, the magnets M1, M2 are both arranged at opposite edges of the plate 2 such that the respective magnet M1, M2 is arranged between the platform P, particularly between plate P, and a portion of the base S facing the plate 2, respectively, as indicated in Fig. 2. Thus, the platform P, the base S, the first and second magnets M1, M2 are arranged in a common extension plane running parallel to said plane P1 so that the device 1 forms a flat layer-like structure that comprises only a small height h in the direction of the optical axis which height is about 0.9mm according to an example (the base S can be 0.8 mm thick and the plate 0.7 mm as an example). The footprint of the device/base S can be about 8 x 13.5 mm² in said plane P1.

In order to tilt the platform P/plate 2 about axis A, the device 1 further comprises at least one first coil C1 that comprises a first coil section 10 opposing the first magnet M1, such that an electrical current flowing through the first coil C1 and thus through the first coil section 10 generates a Lorentz force in a direction extending orthogonal to said plane P1 such that a tilting of the platform P is caused.

Further, particularly, the first coil C1 can comprise a further first coil section 11 opposing the second magnet M2, such that an electrical current flowing through the first coil C1 (and thus through further first coil section 11) generates a Lorentz force in a direction extending orthogonal to said plane P1, too. Particularly, the magnetizations of the first and second magnets M1, M2 extend in the same direction and are oriented such that the Lorentz forces generated at the first coil sections 10, 11 work in the same tilt direction for a given current flowing through the first coil C1.

Preferably, the base S is formed as a printed circuit board, wherein the first coil C1 is integrated into the printed circuit board (PCB). The first coil C1 surrounds an opening 4 formed into the base S in which the optical element 2 is arranged. The first coil C1 thus surrounds the plate 2, too, and extends along an inner edge of the frame-like PCB base S.

Preferably, in the embodiment shown in Figs. 1 and 2, the platform P comprises a rectangular contour as seen in a top view perpendicular to the plane P1, and/or the opening 4 extends completely through the base S in a direction perpendicular to the plane P1 and an inner contour of the opening 4 has a rectangular contour as seen in a top view perpendicular to the plane P1, wherein further the platform P is at least partially arranged in the opening 4, the first axis A extends obliquely with respect to the principal axes of said contour, and the carrier device further comprises a third and a fourth magnet M3, M4, wherein the third magnet M3 and the first magnet M1 are arranged at a common first edge of the contour and at adjacent sides of the contour, and the fourth magnet M4 and the second magnet M2 are arranged at a common second edge of the contour and at adjacent sides of the contour, wherein the first edge is opposed to the second edge, and an imaginary connection line between the first edge and the second edge extends obliquely, preferably perpendicular, to the first axis A. Finally, the third and the fourth magnet M3, M4 are preferably each magnetized parallel to said plane P1, wherein the first coil C1 comprises a second coil section 20 opposing the fourth magnet M4, and the first coil C1 comprises a further second coil section 21 opposing the third magnet M3.

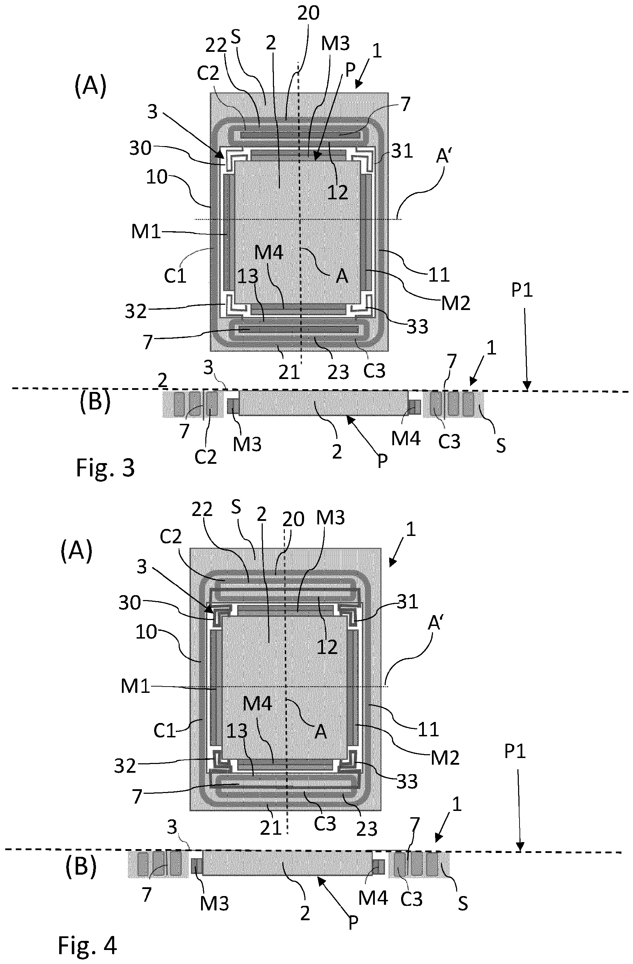

Figs. 3 and 4 show alternative embodiments of a carrier device 1 according to the present invention.

Here, the transparent plate 2 (e.g. glass plate) that can be designed as described above may be tilted in four different positions, i.e., in two dimensions.

The first coil C1 being integrated into base S in turn surrounds the entire optical element 2 (e.g. transparent plate 2), wherein two opposing first coil sections 10, 11 of the first coil C1 (left and right in the Figs. 3 and 4) are adjacent to a magnet M1, M2, respectively, the magnets M1, M2 being attached to the plate 2. Second coil sections 20, 21 (top and bottom sides of the surrounding coil in Figs. 3 and 4) are in a larger distance to the respective third and fourth magnets M3, M4, to minimize a Lorenz force on these magnets. Thus, surrounding fist coil C1 only causes tilt around the dashed line corresponding to first axis A.

The device 1 further comprises a second (top) coil C2 and a third (bottom) coil C3 that are arranged adjacent to the respective third or fourth magnet M3, M4. The second and third coils C2, C3 interact with the respective magnet M3, M4 to cause a tilt around a second axis A' corresponding to the dotted lines in Figs. 3 and 4. The second coil C2 and the third coil C3 may each comprise a magnetic yoke 7. In the center of the coils C2, C3 the magnetic yoke 7 separates the required portion of the coil C2, C3, i.e. first coil sections 12, 13, from the portion which is to be insulated from the respective magnet M3, M4 (i.e. second coil portions 22, 23). The magnetic yoke 7 may be a metal sheet which reduces the interaction between said portions of the coils C2, C3 which are not adjacent to the magnets M3, M4. The magnetic yokes 7 may be formed integrally with the PCB (cf. Fig. 3). Alternatively, the magnetic yokes 7 may be integrally formed with the spring structure (cf. Fig. 4), wherein the magnetic yokes 7 are in particular bent by 90° and inserted into dedicated slits in the base / PCB S. Thus, the magnetic yokes 7 provide a form fitting mechanical connection to the base S. However, in an embodiment, the yokes 7 may also be omitted in the embodiments of Figs. 3 and 4 or substituted or supplemented by other means described herein.

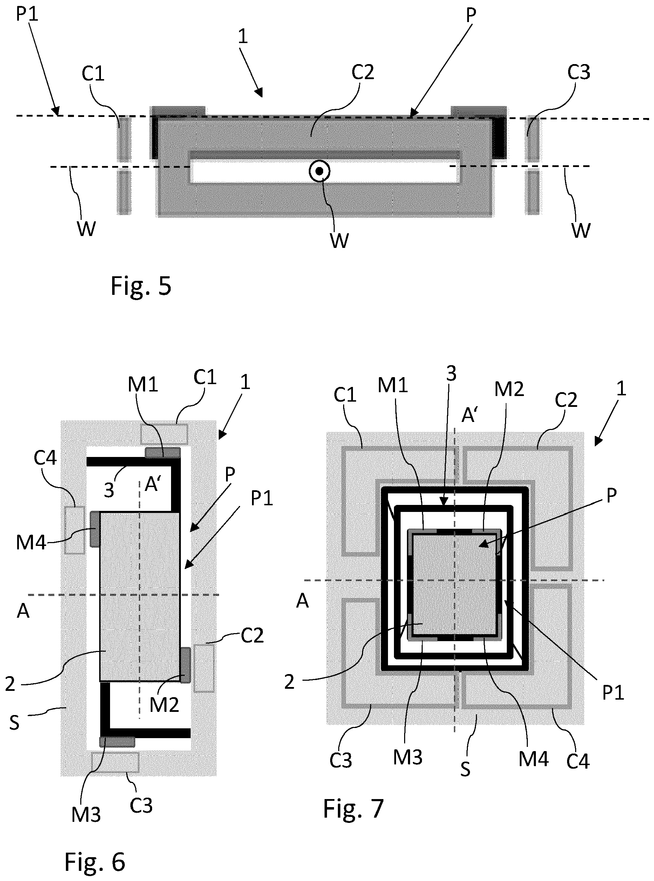

Furthermore, Fig. 5 shows an alternative embodiment of arranging coils C1, C2, C3 with the respect to the base S, wherein here the coils C1, C2, C3 have a virtual coil axis (i.e. winding axis) W about which the windings extend, which virtual coil axis W extends along the plane of the PCB. Particularly, only the upper part of the respective coil C1, C2, C3 in Fig. 5 is used to generate the Lorentz force for tilting the plate 2. Alternatively, the lower part of the respective coil C1, C2, C3 may be used. The respective coil C1, C2, C3 may be built from conductive tracks in the base / PCB S.

Furthermore, Fig. 6 shows an alternative embodiment, wherein here the coils C1, C2, C3, C4 are configured as local coils. Each coil being integrated into the base (e.g. PCB) S and arranged adjacent an associated magnet M1, M2, M3, M4 which are magnetized in the plane P1 defined by the platform / optical element 2 which can be a transparent plate 2 as described herein.

The plate 2 is connected to the base via two L-shaped spring arms 30, 31, wherein two of the magnets M1, M2 are connected to lateral sides of the plate 2 while the remaining two magnets M3, M4 are each connected to one of the spring arms 30, 31. The plate 2 can thus be tilted about two independent axes A, A'.

Furthermore, Fig. 7 shows an alternative embodiment, wherein here the coils C1, C2, C3, C4 are configured as local coils, too, each coil being integrated into a corner region of the base (e.g. PCB) S. Here, the spring structure 3 is formed as a gimbal wherein the magnets M1, M2, M3, M4 are each arranged at a corner of the optical element 2 and thus face an associated coil C1, C2, C3, C4. The platform P corresponds to an inner frame of the gimbal 3 to which the optical element 2 (e.g. a transparent plate as described herein) is connected.

The magnets M1, M2, M3, M4 are magnetized in the plane P1 defined by the platform P / optical element 2.

Figs. 6 and 7 provide examples for a carrier device 1 according to the present invention that do not need a coil surrounding the whole plate 2.

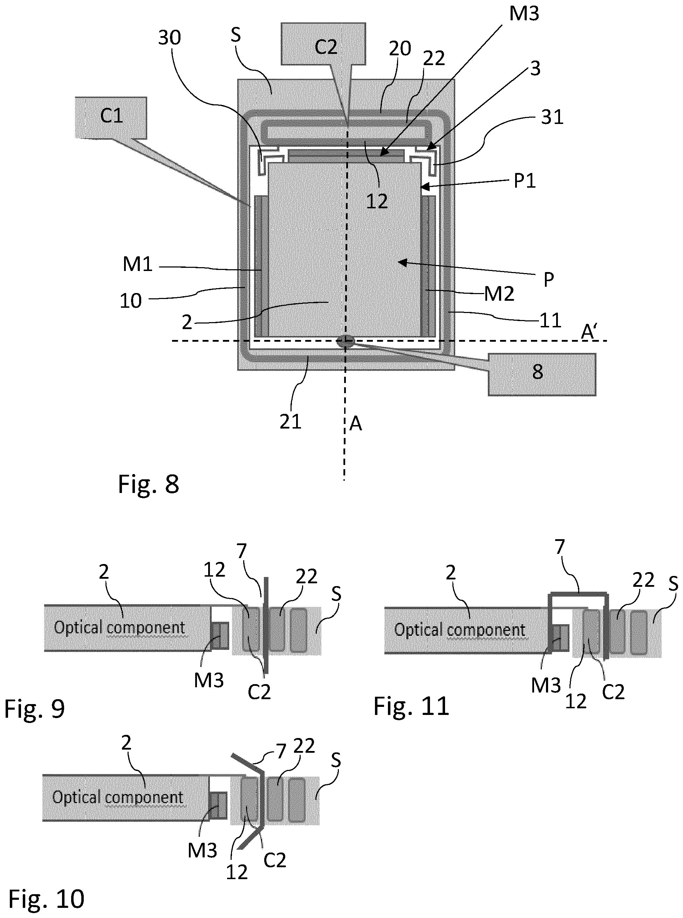

Finally, Fig. 8 shows an embodiment, wherein the device 1 comprises a first surrounding coil C1 and a local second coil C2 as well as a pivot joint 8 on a side of the base S opposite the second coil C2. This configuration results in the possibility to tilt the platform P / optical element 2 (e.g. a transparent plate as described herein) about a first axis A that extends from the second coil C2 to the pivot joint 8 through the plate 2 and a further axis A' that extends orthogonal to the first axis A through the plate 2.

As described in conjunction with Figs. 3 and 4, the carrier device 1 comprises said first coil C1 which is integrated into the base S and surrounds the platform P formed by the optical element 2. The plate 2 is arranged in an opening 4 of the base S.

The first coil C1 comprises two first coil sections 10, 11 opposing one another, wherein a magnet M 1, M2 is associated with the respective first coil section 10, 11 and arranged adjacent the respective first coil section 10, 11. The magnets M1, M2 are magnetized parallel to said plane P1 so that if an electrical current flows through first coil C1 a Lorentz force is generated that tilts the plate 2 about the first axis A (depending on the direction of the current in the first coil).

Besides the pivot joint 8 connecting the plate 2 to the base S, the device 1 comprises a spring structure 3 comprised of two spring arms 30, 31 connecting corner regions of the plate 2 to the base S opposite the pivot joint 8.

Further, particularly, the second coil C2 is integrated into the base S opposite the pivot joint 8 and is surrounded by the first coil C1. A third magnet M3 connected to plate 2 is magnetized parallel to said plane P1 and arranged adjacent the second coil C2. The latter comprises a first coil section 12 opposing the third magnet M3, such that an electrical current flowing through the first coil section 12 of the second coil C2 generates a Lorentz force in a direction extending orthogonal to said plane P1 such that a tilting of the platform P about the second axis A' is caused. Further the second coil C2 comprises a second coil section 22 opposite the first coil section 12 of the second coil C2, wherein the first coil section 12 of the second coil C2 is arranged between the second coil section 22 of the second coil C2 and the third magnet M3. The influence of the second coil section 22 on the Lorentz force is therefore considerably weaker and the latter is dominated by the contribution from the first coil section 12.

Particularly, the magnetic yoke 7 described above can be formed according to the embodiments shown in Figs. 9 to 11.

Fig. 9 shows a cross-sectional view of a magnetic yoke 7 that is fixed to the base S and can e.g. extend between a first coil section 12 of coil C2 and an associated second coil section 22 of coil C2 as shown e.g. in Fig. 3. Particularly, the yoke 7 comprises a straight cross-sectional contour extending essentially perpendicular with respect to the base S / plane P1.

Fig. 10 shows a variation of the yoke 7 shown in Fig. 9, wherein here the yoke 7 has a curved shape in cross-section so that the yoke 7 curves around the first coil section 12 from the outside.

Finally, Fig. 11 shows a cross-sectional view of a magnetic yoke 7, wherein here, in contrast to Figs. 9 and 10, the yoke 7 is connected to the platform P and thus moves with the platform P (cf. also Fig. 4) when the latter is tilted, wherein the yoke 7 extends from an edge of the platform P over magnet M3 and the first coil section 12 of coil C2 and reaches behind said first coil section 12 so as to extend in a slot between the first coil section 12 and the opposing second coil section 22 of coil C2. The slot can be configured so as to allow free movement of the yoke 7 in the slot without mechanical friction.

In the following, further aspects of the present invention and embodiments thereof shall be listed as items. These items may however also be formulated as claims of the present invention. The reference numerals in parentheses refer to the Figures:
Item 1: Carrier device (1) for carrying an optical element (2), comprising:
   - a platform (P) defining a plane (P1),
   - a base (S),
   - a spring structure (3) connecting the platform to the base so as to allow tilting of the platform with respect to the base about a least a first axis (A) extending parallel to said plane,
   - a first magnet (M1) and a first coil (C1), wherein the first magnet is connected to the platform and the first coil (C1) is connected to the base, or wherein the first magnet is connected to the base and the first coil (C1) is connected to the platform (P), and wherein the first magnet (M1) is magnetized parallel to said plane (P1),
   - wherein the first coil (C1) comprises a first coil section (10) opposing the first magnet (M1), such that an electrical current flowing through the first coil section (10) generates a Lorentz force in a direction extending at an angle in the range from 88° to 92° with respect to said plane (P1) such that a tilting of the platform (P) is caused, and wherein
   - the platform (P), the base (S), the first magnet (M1) and the first coil section (10) are arranged in a common extension plane running parallel to said plane (P1).
Item 2: The carrier device according to item 1, wherein a height (h) of the carrier device (1) is smaller or equal to 3 mm, preferably smaller or equal to 2 mm, preferably smaller or equal to 1.5 mm.
Item 3: The carrier device (1) according to one of the preceding items, wherein the first coil (C1) is connected to the base (S) and surrounds the platform (P).
Item 4: The carrier device (1) according to one of the preceding items, wherein the first magnet (M1) is arranged at an edge (5) of the platform (P), particularly such that the first magnet (M1) is arranged between the platform (P) and a portion of the base (S) facing the platform (P).
Item 5: The carrier device according to one of the preceding items, wherein the spring structure (3) comprises two spring arms (30, 31) connecting the platform (P) to the base (S) to allow said tilting of the platform.
Item 6: The carrier device according to one of the items 1 to 3, wherein the spring structure (3) comprises a plurality of spring arms (30, 31, 32, 33), particularly four spring arms, allowing a tilting of the platform (P) also about a second axis (A'), wherein the second axis (A') extends parallel to said plane (P1), and wherein the second axis (A') extends obliquely or perpendicularly with respect to the first axis (A).
Item 7: The carrier device according to one of the preceding items, wherein the carrier device (1) comprises a second coil (C2) comprising a first coil section (12), wherein the fist and the second coil (C1, C2) are configured to generate forces resulting in torques in different tilting directions, around different tilting axes (A, A').
Item 8: The carrier device according to item 7, wherein the respective coil (C1, C2) comprises a second coil section (20, 22), particularly for closing coil windings of the respective coil (C1, C2).
Item 9: The carrier device according to item 8, wherein the second coil section (20, 22) of the respective coil (C1, C2) does not contribute or contributes less to a Lorentz force generated by means of the respective coil (C1, C2) than the first coil section (10, 12) of the respective coil, particularly due to one of:
   - a magnetic yoke (7) arranged between the first coil section (12, 12) and the second coil section (22, 23),
   - the second coil section (20, 21, 22, 23) being arranged in a zone with a lower magnetic field than the first coil section (10, 11, 12, 13),
   - the second coil section being arranged in a zone with an opposing magnetic field, wherein particularly the carrier device (1) is configured to generate said opposing magnetic field by a magnet portion arranged on the platform (P).
Item 10: The carrier device according to one of the preceding items, wherein the carrier device (1) further comprises a second magnet (M2) connected to the platform, wherein the second magnet (M2) is magnetized parallel to said plane (P1), and wherein the first coil (C1) comprises a further first coil section (11) opposing the second magnet (M2), such that an electrical current flowing through the further first coil section (11) generates a Lorentz force in a direction extending at an angle in the range from 88° to 92° with respect to said plane (P1) such that a tilting of the platform (P) is caused.
Item 11: The carrier device according to one of the preceding items, wherein
   - the platform (P) has a rectangular contour as seen in a top view perpendicular to the plane (P1), and/or the base (S) comprises an opening, wherein the opening extends completely through the base (S) in a direction perpendicular to the plane (P1) and an inner contour of the opening has a rectangular contour as seen in a top view perpendicular to the plane (P1),
   - the platform (P) is at least partially arranged in the opening,
   - the first axis (A) extends obliquely with respect to the principal axes of the contour,
   - the carrier device further comprises a third and a fourth magnet (M3, M4), wherein the third magnet (M3) and the first magnet (M1) are arranged at a common first edge of the contour and at adjacent sides of the contour, and the fourth magnet (M4) and the second magnet (M2) are arranged at a common second edge of the contour and at adjacent sides of the contour,
   - the first edge is opposed to the second edge,
   - an imaginary connection line between the first edge and the second edge extends obliquely, preferably perpendicular, to the first axis (A),
   - the third and the fourth magnet (M3, M4) are each magnetized parallel to said plane (P1), wherein the first coil (C1) comprises a second coil section (20) opposing the fourth magnet (M4), and the first coil (C1) comprises a further second coil section (21) opposing the third magnet (M3).
Item 12: The carrier device according to one of the items 1 to 10, wherein the carrier device (1) further comprises a second coil (C2), wherein the second coil (C2) is arranged on the base (S), and wherein the first coil (C1) surrounds the second coil (C2).
Item 13: The carrier device according to item 12, wherein the carrier device (1) further comprises a third magnet (M3) connected to the platform (P), wherein the third magnet (M3) is magnetized parallel to said plane (P1), and wherein the second coil (C2) comprises a first coil section (12) opposing the third magnet (M3), such that an electrical current flowing through the first coil section (12) of the second coil (C2) generates a Lorentz force in a direction extending at an angle in the range from 88° to 92° with respect to said plane (P1) such that a tilting of the platform (P) is caused, and wherein the second coil (C2) comprises a second coil section (22) opposite the first coil section (12) of the second coil (C2), wherein the first coil section (12) of the second coil (C2) is arranged between the second coil section (22) of the second coil (C2) and the third magnet (M3), wherein preferably a magnetic yoke (7) is arranged between the first and the second coil sections (12, 22) of the second coil (C2).
Item 14: The carrier device according to one of the items 1 to 10, 12, 13, wherein the carrier device (1) further comprises a third coil (C3), wherein the third coil (C3) is arranged on the base (S) opposite the second coil (C2), and wherein the first coil (C1) surrounds the third coil (C3).
Item 15: The carrier device according to item 14, wherein the carrier device (1) further comprises a fourth magnet (M4) connected to the platform (P), wherein the fourth magnet (M4) is magnetized parallel to said plane (P1), and wherein the third coil (C3) comprises a first coil section (13) opposing the fourth magnet (M4), such that an electrical current flowing through the first coil section (13) of the third coil (C3) generates a Lorentz force in a direction extending at an angle in the range from 88° to 92° with respect to said plane (P1) such that a tilting of the platform (P) is caused, and wherein the third coil (C3) comprises a second coil section (23) opposite the first coil section (13) of the third coil (C3), wherein the first coil section (13) of the third coil (C3) is arranged between the second coil section (23) of the third coil (C3) and the fourth magnet (M4), wherein a magnetic yoke (7) is preferably arranged between the first and the second coil sections (13, 23) of the third coil (C3).
Item 16: The carrier device according to item 12 or 13, wherein the carrier device (1) comprises a pivot joint (8) pivotably connecting the platform (P) to the base (S) on a side of the base (S) opposite the second coil (C2).
Item 17: The carrier device according to one of the preceding items, wherein the platform (P) comprises magnetic yokes, each yoke reaching around an associated first coil section (10, 11, 12, 13).
Item 18: The carrier device according to one of the preceding items, wherein the platform (P) comprises or forms an optical element (2).
Item 19: The carrier device according to one of the items 1 to 17, wherein the platform carries an optical element (2).
Item 20: The carrier device according to one of the preceding items, wherein the optical element (2) is one of: a transparent plate, a glass plate, a mirror, a prism, a diffuser.
Item 21: The carrier device according to one of the preceding items, wherein the respective coil (C1, C2, C3) extends orthogonal to said plane (P1), wherein the respective coil (C1, C2, C3) comprises a virtual coil axis (W) about which windings of the respective coil extend, wherein said coil axis (W) extends parallel to said plane (P1).
Item 22: The carrier device according to one of the preceding items, wherein the respective coil (C1, C2, C3) is an integral part of the base (S).
Item 23: The carrier device according to one of the preceding items, wherein the base (S) is formed as or comprises a printed circuit board.

## Claims

1. Carrier device (1) for carrying an optical element (2), comprising:
- a platform (P) defining a plane (P1),
- a base (S),
- a spring structure (3) connecting the platform to the base so as to allow tilting of the platform with respect to the base about a least a first axis (A) extending parallel to said plane,
- a first magnet (M1) and a first coil (C1), wherein the first magnet is connected to the platform and the first coil (C1) is connected to the base, or wherein the first magnet is connected to the base and the first coil (C1) is connected to the platform (P), and wherein the first magnet (M1) is magnetized parallel to said plane (P1),
- wherein the first coil (C1) comprises a first coil section (10) opposing the first magnet (M1), such that an electrical current flowing through the first coil section (10) generates a Lorentz force in a direction extending at an angle in the range from 88° to 92° with respect to said plane (P1) such that a tilting of the platform (P) is caused, and wherein
- the platform (P), the base (S), the first magnet (M1) and the first coil section (10) are arranged in a common extension plane running parallel to said plane (P1).

2. The carrier device according to claim 1, wherein a height (h) of the carrier device (1) is smaller or equal to 3 mm, preferably smaller or equal to 2 mm, preferably smaller or equal to 1.5 mm.

3. The carrier device (1) according to one of the preceding claims, wherein the first coil (C1) is connected to the base (S) and surrounds the platform (P).

4. The carrier device (1) according to one of the preceding claims, wherein the first magnet (M1) is arranged at an edge (5) of the platform (P), particularly such that the first magnet (M1) is arranged between the platform (P) and a portion of the base (S) facing the platform (P).

5. The carrier device according to one of the preceding claims, wherein the spring structure (3) comprises two spring arms (30, 31) connecting the platform (P) to the base (S) to allow said tilting of the platform.

6. The carrier device according to one of the claims 1 to 3, wherein the spring structure (3) comprises a plurality of spring arms (30, 31, 32, 33), particularly four spring arms, allowing a tilting of the platform (P) also about a second axis (A'), wherein the second axis (A') extends parallel to said plane (P1), and wherein the second axis (A') extends obliquely or perpendicularly with respect to the first axis (A).

7. The carrier device according to one of the preceding claims, wherein the carrier device (1) comprises a second coil (C2) comprising a first coil section (12), wherein the fist and the second coil (C1, C2) are configured to generate forces resulting in torques in different tilting directions, around different tilting axes (A, A').

8. The carrier device according to claim 7, wherein the respective coil (C1, C2) comprises a second coil section (20, 22), particularly for closing coil windings of the respective coil (C1, C2).

9. The carrier device according to claim 8, wherein the second coil section (20, 22) of the respective coil (C1, C2) does not contribute or contributes less to a Lorentz force generated by means of the respective coil (C1, C2) than the first coil section (10, 12) of the respective coil, particularly due to one of:
- a magnetic yoke (7) arranged between the first coil section (12, 12) and the second coil section (22, 23),
- the second coil section (20, 21, 22, 23) being arranged in a zone with a lower magnetic field than the first coil section (10, 11, 12, 13),
- the second coil section being arranged in a zone with an opposing magnetic field, wherein particularly the carrier device (1) is configured to generate said opposing magnetic field by a magnet portion arranged on the platform (P).

10. The carrier device according to one of the preceding claims, wherein the carrier device (1) further comprises a second magnet (M2) connected to the platform, wherein the second magnet (M2) is magnetized parallel to said plane (P1), and wherein the first coil (C1) comprises a further first coil section (11) opposing the second magnet (M2), such that an electrical current flowing through the further first coil section (11) generates a Lorentz force in a direction extending at an angle in the range from 88° to 92° with respect to said plane (P1) such that a tilting of the platform (P) is caused.

11. The carrier device according to one of the preceding claims, wherein
- the platform (P) has a rectangular contour as seen in a top view perpendicular to the plane (P1), and/or the base (S) comprises an opening, wherein the opening extends completely through the base (S) in a direction perpendicular to the plane (P1) and an inner contour of the opening has a rectangular contour as seen in a top view perpendicular to the plane (P1),
- the platform (P) is at least partially arranged in the opening,
- the first axis (A) extends obliquely with respect to the principal axes of the contour,
- the carrier device further comprises a third and a fourth magnet (M3, M4), wherein the third magnet (M3) and the first magnet (M1) are arranged at a common first edge of the contour and at adjacent sides of the contour, and the fourth magnet (M4) and the second magnet (M2) are arranged at a common second edge of the contour and at adjacent sides of the contour,
- the first edge is opposed to the second edge,
- an imaginary connection line between the first edge and the second edge extends obliquely, preferably perpendicular, to the first axis (A),
- the third and the fourth magnet (M3, M4) are each magnetized parallel to said plane (P1), wherein the first coil (C1) comprises a second coil section (20) opposing the fourth magnet (M4), and the first coil (C1) comprises a further second coil section (21) opposing the third magnet (M3).

12. The carrier device according to one of the claims 1 to 10, wherein the carrier device (1) further comprises a second coil (C2), wherein the second coil (C2) is arranged on the base (S), and wherein the first coil (C1) surrounds the second coil (C2).

13. The carrier device according to claim 12, wherein the carrier device (1) further comprises a third magnet (M3) connected to the platform (P), wherein the third magnet (M3) is magnetized parallel to said plane (P1), and wherein the second coil (C2) comprises a first coil section (12) opposing the third magnet (M3), such that an electrical current flowing through the first coil section (12) of the second coil (C2) generates a Lorentz force in a direction extending at an angle in the range from 88° to 92° with respect to said plane (P1) such that a tilting of the platform (P) is caused, and wherein the second coil (C2) comprises a second coil section (22) opposite the first coil section (12) of the second coil (C2), wherein the first coil section (12) of the second coil (C2) is arranged between the second coil section (22) of the second coil (C2) and the third magnet (M3), wherein preferably a magnetic yoke (7) is arranged between the first and the second coil sections (12, 22) of the second coil (C2).

14. The carrier device according to one of the claims 1 to 10, 12, 13, wherein the carrier device (1) further comprises a third coil (C3), wherein the third coil (C3) is arranged on the base (S) opposite the second coil (C2), and wherein the first coil (C1) surrounds the third coil (C3).

15. The carrier device according to claim 12 or 13, wherein the carrier device (1) comprises a pivot joint (8) pivotably connecting the platform (P) to the base (S) on a side of the base (S) opposite the second coil (C2).

16. The carrier device according to one of the preceding claims, wherein the platform (P) comprises magnetic yokes, each yoke reaching around an associated first coil section (10, 11, 12, 13).

17. The carrier device according to one of the preceding claims, wherein the respective coil (C1, C2, C3) extends orthogonal to said plane (P1), wherein the respective coil (C1, C2, C3) comprises a virtual coil axis (W) about which windings of the respective coil extend, wherein said coil axis (W) extends parallel to said plane (P1).

18. The carrier device according to one of the preceding claims, wherein the base (S) is formed as or comprises a printed circuit board.
